# EUROPEAN PATENT APPLICATION

(11) **EP 4 712 112 A1**
(43) Date of publication of application: **18.03.2026**
(21) Application number: 24199660.2
(22) Date of filing: 11.09.2024
(51) Int. Cl.: H01F 1/057, H01F 41/02, H02K 1/02, H02K 15/02

(54) **ND-FE-B PERMANENT MAGNET WITH CERIUM, ROTOR ASSEMBLY, ELECTROMECHANICAL TRANSDUCER, WIND TURBINE**

(71) Applicant: Siemens Gamesa Renewable Energy A/S, 7330 Brande (DK)
(72) Inventor: Garcia Gonzalez, Adolfo, 7400 Herning (DK); Taras, Petrica, 7330 Brande (DK); Groendahl, Erik, 8653 Them (DK); Meyer, Georg, 7300 Jelling (DK)
(74) Representative: SGRE-Association

(57) **Abstract**

It is described a Nd-Fe-B permanent magnet (354) comprising 28-35 weight % of rare earth elements,
wherein the content of the sum of Nd (Neodymium) and Pr (Praseodymium) is between 20 and 25 weight %,
wherein the content of Ce (Cerium) is between 5 and 10 weight%,
wherein the spatial extension, i.e. the height (h) of the magnet (354) in the main magnetization direction of the Nd-Fe-B permanent magnet (354) is between 18mm and 26mm.

It is further described a rotor assembly (350) for an electromechanical transducer (340).

## Description

### Field of invention

The present invention relates to the technical field of rare earth permanent magnets of the Nd-Fe-B type. The present invention further relates to a rotor assembly for an electromechanical transducer, which rotor assembly comprises at least one of such an Nd-Fe-B permanent magnet. Furthermore, the present invention relates to an electromechanical transducer comprising such a rotor assembly and to a wind turbine comprising such an electromechanical transducer.

### Art Background

Electromechanical transducers are machines, which convert electrical energy into mechanical energy or vice versa. An electric motor is an electromechanical transducer that converts electrical energy into mechanical energy using magnetic field linkage. An electric generator is an electromechanical transducer that converts mechanical energy into electrical energy also using magnetic field linkage.

An electromechanical transducer comprises a stator and a rotor. The stator is an assembly, which represents the stationary part of an electromechanical transducer. The rotor is an assembly, which represents the moving part of an electromechanical transducer. The above mentioned magnetic field linkage couples the stator with the rotor.

In recent years, especially since the introduction of rare-earth magnetic materials, permanent magnet (PM) electromechanical transducers have become popular since they eliminate the need for commutators and brushes, which are commonly used with conventional Direct Current electromechanical transducer. The absence of an external electrical rotor excitation eliminates losses on the rotor side and makes PM electromechanical transducers more efficient. Further, the brushless design of a PM electromechanical transducer allows conductor coils to be located exclusively in the stationary stator. In this respect it is mentioned that non-PM electromechanical transducers, which are equipped with commutators and brushes, are susceptible to significantly higher maintenance costs.

PM electromechanical transducers are also known for their durability, controllability, and absence of electrical sparking. Thanks to their advantages PM electromechanical transducers are widely used in many applications such as electric vehicles (i.e. the electromechanical transducer is a motor) or in power generation systems (i.e. the electromechanical transducer is a generator) such as for instance in wind turbines. PM electromechanical transducers are used in particular in so called Direct Drive (DD) wind turbines, wherein the generator is directly connected via a main shaft to (a hub of) a rotor of the respective DD wind turbine.

Nowadays, highly efficient PM electromechanical transducers are often equipped with rare earth PM of the Nd-Fe-B type, which produce a strong magnetic field and which, as a consequence, guarantee for a strong magnetic field linkage between rotor and stator. This holds also for the generator of a modern wind turbine and in particular for the generator of a DD wind turbine. Therefore, for realizing a (direct drive) wind turbine generator with a permanent excited synchronous generator the PM material Nd-Fe-B is used.

In order to increase the ability of an Nd-Fe-B PM to resist against a demagnetization field it is known to add the element Dysprosium (Dy) and/or Terbium (Tb) to the magnet grade. In other words, by adding Dy and/or Tb the so called intrinsic coercivity HcJ of the Nd-Fe-B PM is increased.

Due to a high demand and scarce availability the element Dy and Tb became quite expensive in recent time. At the moment the cost level of Dy is challenging in particular for producers of wind turbines. In addition, not all new mines which have opened worldwide can supply Dy and/or Tb. They can only supply the rare earth element Neodymium (Nd) and the corresponding rare earth element Praseodymium (Pr). Praseodymium is often part of the Nd-Fe-B magnet as it has similar chemical and magnetic properties as Neodymium. Therefore, expert prediction is that in the next years with the increasing demand on Nd-Fe-B PM, the price for Dy and/or Tb will further increase.

A further increase in Dy/Tb prices would increase the PM cost for a direct drive generator and would result in a high overall cost of a wind turbine.

In price sensitive applications, Nd and Pr could be replaced by cheaper rare earth materials as Cerium (Ce), Lanthanium (La) and/or Yttrium (Y) which leads to a reduced magnet price. Unfortunately, these materials negatively influence the magnetic properties of the magnet which may be acceptable in many applications.

There may be a need for providing a cheaper Nd-Fe-B permanent magnet with of a small or even vanished content of the expensive Dy and/or Tb and with a content of cheaper rare earth materials like Ce, Y and/or La still having a sufficiently high coercivity Hc and remanence Br such that the magnet can be used under temperature conditions which allow the use of the magnet for electric generators of wind turbines.

### Summary of the Invention

This need may be met by the subject matter according to the independent claims. Advantageous embodiments of the present invention are described by the dependent claims.

Indicators for measuring the performance of neodymium iron magnets include the magnetic remanence Br, the coercivity HcB (i.e. the coercivity HcB at a certain resulting magnetic field being the sum of the magnetic remanence Br of the magnet and the magnetic field H "trying to demagnetize" the magnet), intrinsic coercivity HcJ and maximum energy product (BH)max. In addition, the knee-point Hknee at a certain remaining magnetic remanence B is a further indicator.

Magnetic hysteresis occurs when an external magnetic field is applied to a ferromagnet such as iron or a Nd-Fe-B magnet and the atomic dipoles align themselves with it. Even when the field is removed, part of the alignment will be retained: the material has become magnetized with a magnetic remanence B. Once magnetized, the magnet will stay magnetized indefinitely. To demagnetize it requires heat or a magnetic field H in the opposite direction. The relationship B-H between field strength H and magnetization B is not linear in such materials. If the B-H relationship is plotted for all strengths of applied magnetic field H the result is a hysteresis loop with 4 quadrants. The demagnetization behavior of a magnet can be seen in the second quadrant of a hysteresis loop as shown in this document in figures 4 and 5.

In the context of the present document, the Magnetic Remanence Br is a measurement for the magnetic induction or magnetic flux density that remains in the permanent magnet after successful magnetization.

Simply said: the higher the Magnetic Remanence Br, the "stronger" the magnetic forces the permanent magnet can create.

Once magnetized, the magnet will stay magnetized. T (Tesla) is used as the unit of measurement for magnetic induction and, respectively, magnetic flux density. To demagnetize the magnet, it requires heat or a magnetic field H acting in the opposite direction.

In the context of the present document, Coercivity, also called the magnetic coercivity, coercive field or coercive force, is a measure of the ability of the permanent magnet (a ferromagnetic material) to withstand an external magnetic field H without becoming demagnetized. Coercivity is usually measured in oersted or ampere/meter units and is denoted Hc or HcB.

Coercivity in a ferromagnetic material is the intensity of the applied magnetic field (H field) required to demagnetize that material, after the magnetization of the sample has been driven to saturation by a strong field. This demagnetizing field is applied opposite to the original saturating field.

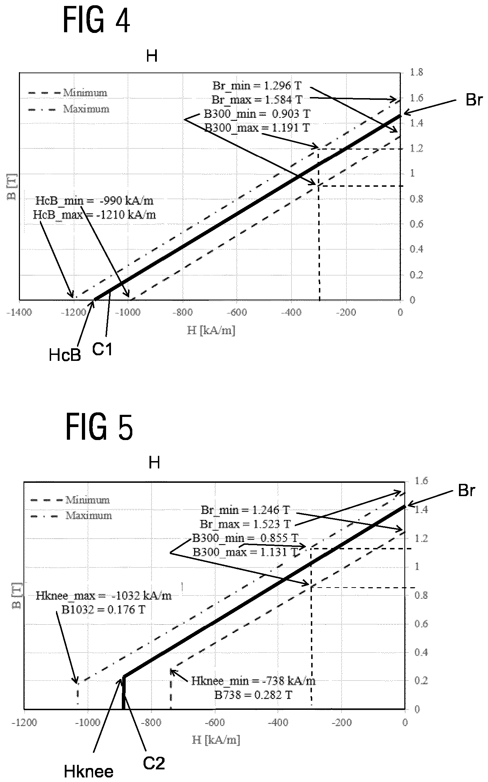

The intrinsic curve or B-H demagnetization curve is shown in figures 4 and 5 and which is the second quadrant of the Hysteresis curve (not shown) of the magnet. The intrinsic magnetic induction intensity generated by the permanent magnetic material after being magnetized under the action of an external magnetic field is called intrinsic magnetic induction intensity (Remanence) Br, also known as magnetic polarization intensity J. The curve of the magnet's magnetic polarization intensity J and the external magnetic field intensity H can reflect the change of the inherent magnetic properties of the permanent magnet material. It is called the intrinsic demagnetization curve, or the intrinsic curve for short, and is also called the J-H or B-H demagnetization curve.

When the magnetic polarization intensity J on the demagnetization curve is 0, the corresponding magnetic field intensity is called the intrinsic coercive force HcJ. The value of intrinsic coercivity reflects the size of the anti-demagnetization ability of the permanent magnetic material.

Knee point at Hknee

When the external magnetic field keeps increasing, the magnetic induction intensity/magnetic polarization intensity of the magnet decreases very slowly, but when the external magnetic field is greater than a certain value Hknee, the magnetic induction intensity of the magnet decreases rapidly leading to a at least partly demagnetized magnet.

The bending point or knee point at Hknee of the demagnetization curve is of special interest. The corresponding magnetic field at this point is Hknee, which is also called the knee coercivity Hknee. When the external magnetic field H is greater than Hknee, an irreversible loss of magnet performance will occur, Which makes the value of Hknee an important characteristic (together with HcB, Br, HcJ) .

According to a first aspect of the invention, there is provided a Nd-Fe-B permanent magnet which comprises 28-35 weight % of rare earth elements,
wherein the content of the sum of Nd (Neodymium) and Pr (Praseodymium) is between 20 and 25 weight %,
wherein the content of Ce (Cerium) is between 5 and 10 weight %,
wherein the operation temperature of the magnet is between -30°C and 80°C
wherein the magnet has at a temperature of 20°C:
   - an intrinsic coercivity which is between
   - 990 kA/m and -1210 kA/m,
   - a magnetic remanence Br which is between 1.296 T (Tesla) and 1,584 T,
   wherein the magnet has at a temperature of 60°C:
   - a coercivity at a minimum knee point of more than 738 kA/m absolut (or less than -738 kA/m) at a remanence B of 0,282 T and
   - a coercivity at a maximum knee point of less than 1032 kA/m absolut (or more than -1032 kA/m) at a remanence r (B) at 0,176 T
   - a magnetic remanence (Br) which is between 1.246 T (Tesla) and 1,523 T.
wherein the spatial extension in the main magnetization direction of the Nd-Fe-B permanent magnet, i.e. the height (h) of the magnet (354) is between 18mm and 26mm,
wherein the content of the sum of Dy (Dysprosium) and Tb (Terbium) is smaller than 0,5 weight %, preferably smaller than 0,1 weight % preferably 0 weight %.

The described Nd-Fe-B permanent magnet (PM) is based on the idea that by combining the features of the geometry of the PM towards a shape having a sufficient thickness parallel to the magnetization of the magnet and the shown contents of Ce, Dy and Tb, the content of the expensive elements Nd, Pr, Dy and/or Tb and/or Pr can be significantly reduced while maintaining acceptable values representing a good demagnetization behavior of the magnet. Hence, the magnet shows a sufficient ability to resist against a demagnetization field.

It is mentioned that the described Nd-Fe-B magnet can be realized even with a zero content of Dy and Tb, wherein unintentional impurities are not taken into account. Such impurities may be possible since due to its similar chemical behavior different rare earth element can typically not be separated with a reliability of 100%.

According to a further embodiment of the invention, the Nd-Fe-B permanent magnet has a length of the magnet in the generator's axial direction being between 40mm and 75mm and/or a width in the generator's circumferential direction being between 90mm and 125mm.

These dimensions are important for the application in a large permanent magnet synchronous generator in order to keep the good magnetic properties.

According to a further aspect of the invention, there is a rotor assembly for an electromechanical transducer, in particular for a generator, in particular for a permanent magnet synchronous generator of a wind turbine, the rotor assembly comprising a support structure, and at least one Nd-Fe-B permanent magnet, wherein the Nd-Fe-B permanent magnet is mounted to the support structure.

The implementation of the magnet into the rotor assembly assures reliability of the transducer over a lifetime of more than 20 years.

According to a further aspect of the invention, there is an electromechanical transducer, in particular a generator of a wind turbine, in particular a permanent magnet synchronous generator of a wind turbine, the electromechanical transducer comprising a stator assembly and a rotor assembly.

The implementation of the magnet into the electromechanical assembly assures reliability of the transducer over a lifetime of more than 20 years.

According to a further aspect of the invention, there is a wind turbine for generating electrical power,
the wind turbine comprising
a tower, a rotor, which is arranged at a top portion of the tower and which comprises at least one blade, and
an electromechanical transducer, wherein the
electromechanical transducer is mechanically coupled with the rotor.

The implementation of the magnet into the wind turbine assures reliability of the transducer over a lifetime of more than 20 years.

It is mentioned that the provided electromechanical transducer may be realized with different designs. A common design option is characterized by the matter of fact that the rotor assembly is located within the stator assembly. Another design option is characterized by the matter of fact that the rotor assembly is located outside from the stator assembly.

In the latter option during operation of the PM electromechanical transducer the magnetic flux interacting between the stator coils and the Nd-Fe-B magnet components may be directed radially outwards from the stator.

It has to be noted that embodiments of the invention have been described with reference to different subject matters. However, a person skilled in the art will gather from the above and the following description that, unless other notified, in addition to any combination of features belonging to one type of subject matter also any combination between features relating to different subject matters is considered as to be disclosed within this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind turbine according to an embodiment of the present invention,
- Figures 2 and 3: show a comparison between a known electromechanical transducer comprising a rotor assembly being equipped with Nd-Fe-B magnets having a certain content of Dy/Tb and an electromechanical transducer in accordance with an embodiment of the invention wherein Nd-Fe-B magnets are used which comprise Ce and have a strongly reduced Dy/Tb content or are free from Dy/Tb,
- Figure 4: shows an illustration B-H diagram with the tolerance curves of a magnet disclosed in figure 3 defining the tolerances of the magnetic properties of the magnet of figure 3 at a temperature of 20° C,
- Figure 5: shows an illustration B-H diagram with the tolerance curves of a magnet disclosed in figure 3 defining the tolerances of the magnetic properties of the magnet of figure 3 at a temperature of 60° C.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

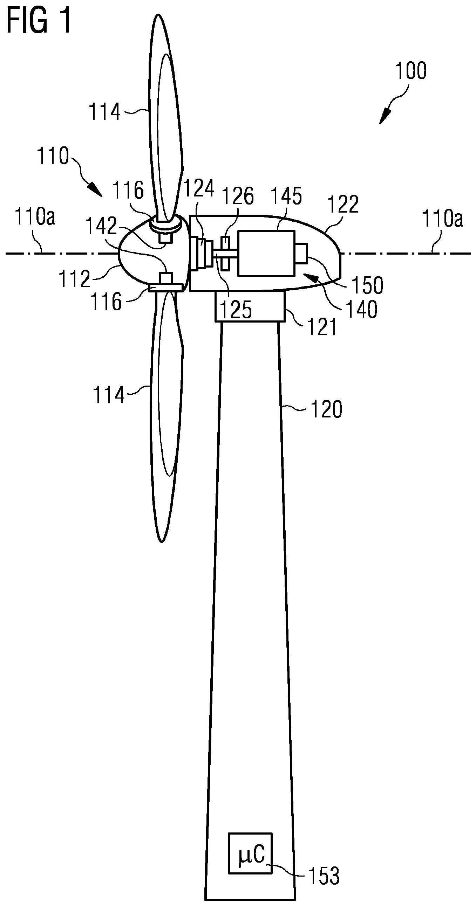

Figure 1 shows a wind turbine 100 according to an embodiment of the invention. The wind turbine 100 comprises a tower 120 which is mounted on a non-depicted fundament. On top of the tower 120 there is arranged a nacelle 122. In between the tower 120 and the nacelle 122 there is provided a yaw angle adjustment device 121 which is capable of rotating the nacelle 122 around a non-depicted vertical axis being aligned with the longitudinal extension of the tower 120. By controlling the yaw angle adjustment device 121 in an appropriate manner it can be made sure that during a normal operation of the wind turbine 100 the nacelle 122 is always properly aligned with the current wind direction. However, the yaw angle adjustment device 121 can also be used to adjust the yaw angle to a position, wherein the nacelle 122 is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a hub 112, extend radially with respect to the rotational axis 110a.

In between the hub 112 and a blade 114 there is respectively provided a blade adjustment device 116 in order to adjust the blade pitch angle of each blade 114 by rotating the respective blade 114 around a non depicted axis being aligned substantially parallel with the longitudinal extension of the respective blade 114. By controlling the blade adjustment device 116 the blade pitch angle of the respective blade 114 can be adjusted in such a manner that at least when the wind is not too strong a maximum wind power can be retrieved from the available wind power. However, the blade pitch angle can also be intentionally adjusted to a position, in which only a reduced wind power can be captured.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to an electromechanical transducer 140. The electromechanical transducer is a generator 140.

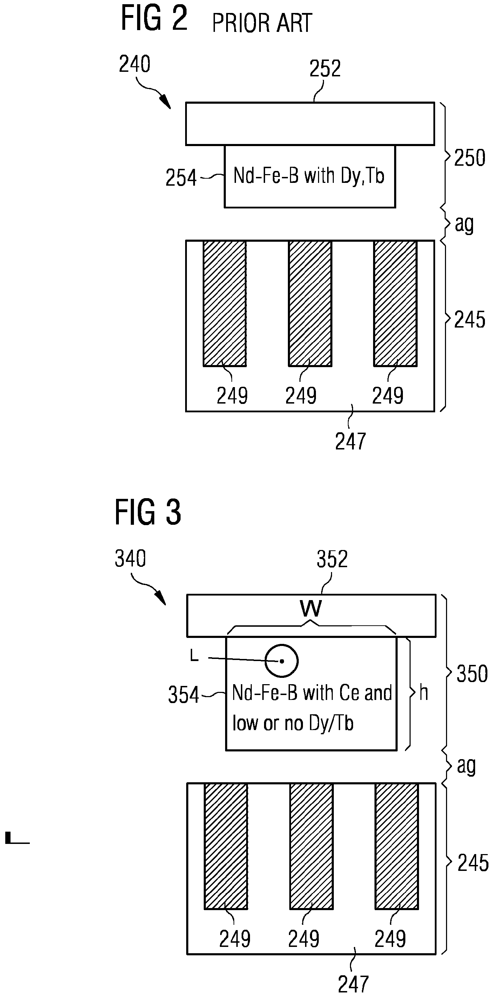

At this point it is pointed out that the gear box 124 is optional and that the generator 140 may also be directly coupled to the rotor 110 by the shaft 125 without changing or converting the numbers of revolutions of the rotor 110. In this case the wind turbine is a so caller Direct Drive (DD) wind turbine. In a further alternative of a DD wind turbine (not shown), the hub 112 is connected to the outer rotor 252 (figs.2 and 3) of a generator wherein the outer rotor 252 being supported by an inner stator 245 via a single main bearing (not shown).

Further, a brake 126 is provided in order to stop the operation of the wind turbine 100 or in order to reduce the rotational speed of the rotor 110 for instance (a) in case of an emergency, (b) in case of too strong wind conditions which might harm the wind turbine 100, and/or (c) in case of an intentional saving of the consumed fatigue life time and/or the fatigue life time consumption rate of at least one structural component of the wind turbine 100.

The wind turbine 100 further comprises a control system 153 for operating the wind turbine 100 in a highly efficient manner. Apart from controlling for instance the yaw angle adjustment device 121 the depicted control system 153 is also used for adjusting the blade pitch angle of the rotor blades 114 in an optimized manner.

In accordance with basic principles of electrical engineering the generator 140 comprises a stator assembly 145 and a rotor assembly 150. The stator assembly 145 comprises a plurality of not depicted coils for generating electrical current in response to a time alternating magnetic flux. The rotor assembly 150 comprises a plurality of Nd-Fe-B permanent magnet pieces which are arranged in an array being arranged around a curved surface area of the rotor assembly 150.

It is mentioned that it is not necessary that the rotor assembly 150 is arranged within the stator assembly 145. It is rather also possible that the rotor assembly surrounds the stator assembly.

Figures 2 and 3 show in a cross sectional view a comparison between (a) a known electromechanical transducer 240 comprising a rotor assembly 250 being equipped with Nd-Fe-B magnet pieces 254 having a certain content of Dy and/or Tb and (b) an electromechanical transducer 340 in accordance with an embodiment of the invention wherein Nd-Fe-B magnet pieces 354 are used which have a composition comprising Ce (Cerium) which partly replaces the Nd and/or Pr content of the magnet pieces 354 as the Cerium is much cheaper than Nd or Pr. Additionally, the content of the sum of (very expensive) Dy and Tb is significantly decreased in order to further reduce the magnet price.

In accordance with embodiments of the invention the Nd-Fe-B permanent magnet pieces comprise a content of 5 to 10 weight % of Ce. In order to ensure that they nevertheless have a sufficient high intrinsic coercivity these Nd-Fe-B permanent magnet (abbreviation PM) pieces have a special physical spatial extension along a direction being parallel with the magnetization direction. Specifically, this physical extension, which in this document is also called the height h of the PM pieces, is between 18mm and 26mm

Both the known electromechanical transducer 240 shown in Figure 2 and the electromechanical transducer 340 in accordance with an embodiment of the invention shown in Figure 3 have the same stator assembly 245. As can be seen from the figures, the stator assembly 245 has a stator support structure 247 comprising a stack of a plurality of lamination sheets and a plurality of stator windings 249 being accommodated within the stator support structure 247. The windings 249 are interconnected in a known manner by means of non-depicted electrical connections.

The rotor assembly 250 of the known electromechanical transducer 240, which is separated from the stator assembly 245 by an air gap ag, comprises a rotor support structure 252 providing the mechanical base for mounting the Nd-Fe-B PM pieces 254. The support structure 252 comprises a magnetic material, e.g. laminated sheets of a steel alloy with soft ferromagnetic properties, in order to optimize the magnetic field generated by the Nd-Fe-B PM piece 254 and other Nd-Fe-B PM pieces not shown in Figure 2. Thereby, in accordance with known principles in the design of electromechanical transducers, the magnetic field is optimized in such a manner that the magnetic field linkage between the stator assembly 245 and the rotor assembly 250 is maximized.

A rotor assembly 350 of the electromechanical transducer 340 comprises a rotor support structure 352 providing the mechanical base for mounting the Nd-Fe-B PM pieces 354. Again, the support structure 352 comprises a magnetic material in order to optimize the magnetic field linkage between the stator assembly 245 and the rotor assembly 350.

According to the embodiment described here the air gap ag between the rotor assembly 350 and the stator assembly 245 can be used for guiding a cooling fluid, e.g. cooling air through the electromechanical transducer 340 in order to remove waste heat which during operation is generated in particular by the stator coils 249 of the stator assembly 245.

It is mentioned that a plurality of PM pieces can be mounted to the support structure 352. The PM pieces are preferably arranged in a matrix like structure around a curved surface area of the support structure 352 having a basically cylindrical geometry. In Figure 3 for the sake of clarity only one PM piece 254 is depicted.

As can be seen in figure 3, there is a height h of the Nd-Fe-B PM piece 354 (or magnet 354) which is between 18 mm and 26 mm in order to align with the respective content of Ce of 5 weight % to 10 weight and the respective magnetic properties.

In other words, by changing both the composition and defining the size of the Nd-Fe-B PM the magnetic properties are kept in the requested range for the generator.

In view of the high price for the element Dy and the cheap price for the element Ce, by reducing the amount of Dy and increasing the amount of Ce in comparison to the amount of Nd and/or Pr, the overall cost of the PM can be reduced by adapting the height h of the Nd-Fe-B PM in a certain range.

The operation temperature of the magnet 354 is between -30°C and 80°C.

Figures 4 and 5 show illustrations of the respective second quadrants of a hysteresis loop with B-H tolerance curves defining the demagnetization behavior of the exemplarily magnet 354 shown in figure 3 at different temperatures 20°C and 60°C.

The y-axis represents the magnetic flux density B of the magnet 354 (unit in Tesla [T]).

The x-axis represents the strength H (unit in kA/m) of the magnetic field acting on the magnet 354 in demagnetization direction. Therefore, the value of H is negative. The values of the magnet's coercivity values Hc are usually represented by its absolute values.

A demagnetizing field H may be created in a permanent magnet generator by the magnetic fields created by the currents in the stator coils.

The graphs C1 and C2 is located between the dotted lines "Maximum" and "Minimum" which represents the maximum and minimum ranges in which the values of graph C1 and C2 are located.

In this x-y graph or B-H graph, the actual magnetic flux density B of the magnet 354 depends on the strength of the magnetic field H. The exemplarily shown curves C1, C2 of the magnet 354 represents its magnetic properties and its ability to withstand the demagnetizing field H.

This ability is called coercivity of the magnet as mentioned. The two parallel dotted lines show the minimum and the maximum boundaries in which the B-H coercivity curves C1 and C2 of the magnet 354 are located respectively.

A number of magnets 354 are located on the rotor support structure 350 (fig.3) each magnet 354 having tolerances and therefore having different magnetic properties which are located within boundaries, i.e. the "Minimum" and "Maximum" dotted lines.

Br_min is the minimum magnetic (saturation) remanence of the magnet 354 (intersection with y-axis).

Br_max is the maximum magnetic (saturation) remanence of the magnet 354 (intersection with y-axis).

If the demagnetizing field H has a higher absolute value than the intrinsic coercivity HcB of the magnet, the magnet will be at least partly demagnetized. This would lead in the application "generator" as shown in figure 3 to a reduced generator performance or a total failure of the generator.

Figure 4 shows the B-H diagram with upper and lower tolerance curves "Maximum", and "Minimum" between which the coercivity curve C1 of the magnet 354 shown in figure 3 is located at a magnet temperature T of 20°C.

The graph C1 shows the magnetic remanence B depending on the demagnetizing field H acting on the magnet 354. The graph C1 extends mainly linearly intersecting at its end with the x-axis and the y-axis. The graph C1 intersecting the B-axis (y-axis) shows the magnetic (saturation) remanence Br of the magnet 354 at a demagnetization field H=0. The graph C1 intersecting the H-axis (x-axis) shows the magnetic (intrinsic) coercivity HcB of the magnet 354 (at maximum allowable demagnetization field H).

There are three points Br_min, B300_min and HcB_min located on the dotted line called "Minimum" which define lower boundaries of the minimum values of the magnetic flux density B depending on the demagnetization field strength H of the magnet 354.

There are three points Br_max, B300_max and HcB_max located on the dotted line called "Maximum" which define a line which defines the upper boundary of the maximum values of the magnetic flux density B depending on the demagnetization field strength H of the magnet 354.

Br is the magnetic (saturation) remanence of the magnet 354 with the curve C2 with a value of about 1.45 T.

Br_min is the minimum magnetic (saturation) remanence of the magnet 354 (intersection with y-axis) and is equal to 1.296 T.

Br_max is the maximum magnetic (saturation) remanence of the magnet 354 (intersection with y-axis) and is equal to 1.584 T.

B300_min is the minimum magnetic flux density of the magnet 354 at a demagnetization field with a magnetic field strength of H=-300 kA/m. B300_min is equal to 0.903 T.

B300_max is the maximum magnetic flux density of the magnet at a demagnetization field with a magnetic field strength of H=-300 kA/m. B300_max is equal to 1.191 T.

HcB_min is minimum intrinsic coercivity of the magnet 354 and equal to -990 kA/m at which the magnet flux density B is 0. HcB_max is the maximum intrinsic coercivity of the magnet 354 and is equal to -1210 kA/m at which the magnet flux density is 0.

Figure 5 shows the B-H diagram with upper and lower tolerance curves "Maximum", and "Minimum" between which the curve C2 of the magnet 354 shown in figure 3 is located at a magnet temperature T of 60°C.

At this temperature of 60°C, the coercivity properties of the magnet 354 are weaker indicated by a knee-point Hknee of the curve C2 and the respective boundary lines "Minimum" and "Maximum". If the demagnetizing field H has a higher absolute value than the coercivity values Hknee_min, Hknee, Hknee_max of the magnet 354 at the respective knee-point, the magnet will be at least partly demagnetized.

There are three points Br_min, B300_min and HcB_min located on the dotted line called "Minimum" which define lower boundary of the minimum values of the magnetic flux density B depending on the demagnetization field strength H of the magnet 354.

There are three points Br_max, B300_max and HcB_max located on the dotted line called "Maximum" which define a line which defines the upper boundary of the maximum values of magnetic flux density B depending on the demagnetization field strength H of the magnet 354.

Br is the magnetic (saturation) remanence of the magnet 354 with the curve C2 with a value of about 1.42 T.

Br_min is the minimum magnetic (saturation) remanence of the magnet 354 (intersection with y-axis) and is equal to 1.246 T.

Br_max is the maximum magnetic (saturation) remanence of the magnet 354 (intersection with y-axis) and is equal to 1.523 T.

B300_min is the minimum magnetic flux density of the magnet 354 at a demagnetization field with a magnetic field strength of H=-300 kA/m. B300_min is equal to 0.855 T.

B300_max is the maximum magnetic flux density of the magnet 354 at a demagnetization field with a magnetic field strength of H=-300 kA/m. B300_max is equal to 1.131 T.

Hknee_min is equal to the coercivity of -738 kA/m of the magnet 354 at the minimum knee point with a magnetic remanence B738 of 0.282 T.

Hknee_max is equal to the coercivity of -1032 kA/m of the magnet 354 at the maximum knee point with a magnetic remanence B1 of 0.176 T.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A Nd-Fe-B permanent magnet (354) comprising 28-35 weight % of rare earth elements,
wherein the content of the sum of Nd (Neodymium) and Pr (Praseodymium) is between 20 and 25 weight %,
wherein the content of Ce (Cerium) is between 5 and 10 weight %,
wherein the operation temperature of the magnet (354) is between -30°C and 80°C,
wherein the magnet (354) has at a temperature of 20°C:
- an coercivity (HcB) which is between -990 kA/m and -1210 kA/m.
- a magnetic remanence (Br) which is between 1.296 T (Tesla) and 1,584 T,
wherein the magnet (354) has at a temperature of 60°C:
- a coercivity which is between
*a minimum knee point (Hknee_min) of -738 kA/m at a remanence B of 0,282 T and
*a maximum knee point (Hknee_max) of -1032 kA/m at a remanence r (B) at 0,176 T,
wherein the magnetic remanence (Br) is between 1.246 T (Tesla) and 1,523 T.
wherein the spatial extension in the main magnetization direction of the Nd-Fe-B permanent magnet (354), i.e. the height (h) of the magnet (354) is between 18mm and 26mm,
wherein the content of the sum of Dy (Dysprosium) and Tb (Terbium) is smaller than 0,5 weight %, preferably smaller than 0,1 weight %, preferably 0 weight %.

2. The Nd-Fe-B permanent magnet as set forth in claim 1, wherein the length (L) of the magnet (354) is between 90mm and 125mm and/or the width (W) of the magnet (354) is between 40mm and 75mm

3. A rotor assembly for an electromechanical transducer (140, 340), in particular for a generator (140, 340), in particular for a permanent magnet synchronous generator (140, 340) of a wind turbine (100), the rotor assembly (350) comprising a support structure (352), and at least one Nd-Fe-B permanent magnet (354) as set forth in any one of the preceding claims, wherein the Nd-Fe-B permanent magnet (354) is mounted to the support structure (352).

4. An electromechanical transducer, in particular a generator (140, 340) of a wind turbine (100), in particular a permanent magnet synchronous generator (140, 340) of a wind turbine (100), the electromechanical transducer (140, 340) comprising a stator assembly (245) and
a rotor assembly (350) as set forth in the preceding claim.

5. A wind turbine for generating electrical power, the wind turbine (100) comprising
a tower (120),
a rotor (110), which is arranged at a top portion of the tower (120)and which comprises at least one blade (114), and an electromechanical transducer (140, 340) as set forth in the preceding claim, wherein the electromechanical transducer (140, 340) is mechanically coupled with the rotor.
